(19) Europäisches Patentamt / European Patent Office / Office européen des brevets

(11) **EP 2 010 936 B1**

(12) **EUROPÄISCHE PATENTSCHRIFT**

(45) Veröffentlichungstag und Bekanntmachung des Hinweises auf die Patenterteilung:
**29.07.2009 Patentblatt 2009/31**

(21) Anmeldenummer: 07703491.6

(22) Anmeldetag: **16.02.2007**

(51) Int Cl.:
*G01S 3/808* *(2006.01)*    *G01S 3/82* *(2006.01)*

(86) Internationale Anmeldenummer:
**PCT/EP2007/001349**

(87) Internationale Veröffentlichungsnummer:
**WO 2007/124797 (08.11.2007 Gazette 2007/45)**

(54) **VERFAHREN ZUR PEILUNG VON SCHALLABSTRAHLENDEN ZIELEN**

PROCESS FOR LOCATING SOUND PROJECTING TARGETS

PROCÉDÉ DE REPÉRAGE DE CIBLES ÉMETTANT DES SONS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.04.2006 DE 102006019588**

(43) Veröffentlichungstag der Anmeldung:
**07.01.2009 Patentblatt 2009/02**

(73) Patentinhaber: ATLAS Elektronik GmbH
**28309 Bremen (DE)**

(72) Erfinder: **PLÜMECKE, Gerrit**
**28357 Bremen (DE)**

(74) Vertreter: **Wasiljeff, Johannes M.B.**
**Jabbusch Arendt & Siekmann**
**Patentanwälte**
**Otto-Lilienthal-Straße 25**
**28199 Bremen (DE)**

(56) Entgegenhaltungen:
**EP-A1- 1 160 581      EP-A2- 1 308 745**
**JP-A- 61 254 870      US-A- 5 617 371**

**Beschreibung**

Die Erfindung betrifft ein Verfahren zur Peilung von schallabstrahlenden Zielen nach dem Oberbegriff des Anspruchs 1.

Bei einem solchen Verfahren, wie es beispielsweise in der DE 100 27 538 beschrieben ist, wird für eine Sonar-Anlage eine Richtungsbildung mit "preformed beams" oder Richtcharakteristiken im Zeitbereich der Empfangssignale durch Zusammenfassung der auf eine gemeinsame Zeitbezugsebene zeitverzögerten und/oder phasenverschobenen Empfangssignale zu Gruppensignalen bewirkt. Der "preformed beam" mit dem größten Empfangspegel, also die von dem Gruppensignal mit dem größten Empfangspegel gebildete Richtcharakteristik, gibt die Zielpeilung an.

Dieses bekannte Peilverfahren geht davon aus, dass die Empfangsantenne mit ihren Wandlern ohne Einschränkungen im freien Raum und ohne die unvermeidlichen Streuungen der Wandlerempfindlichkeiten oder Wandlerwirkungsgrade in idealer Weise aufgebaut ist. Fertigungstoleranzen beim Einbau der Wandler in die Empfangsantenne und/oder der Empfangsantenne an den Antennenträger, z.B. Schiff oder U-Boot führen jedoch zu Fehlanpassungen der Zeitverzögerungen für die Richtungsbildung. Der Einbau erfolgt z.B. in oder an der Schiffswand eines Überwasserschiffes oder der Bootswand eines U-Boots. In vielen Fällen werden die zu Wandleranordnungen zusammengestellten Wandler durch Hüllkörper geschützt. Durch diesen Einbau werden noch zusätzlich die einfallenden Schallwellen an unvermeidlichen Halterungen für den Hüllkörper und/oder durch die Formgebung das Schiffsrumpfs oder des Kiels oder durch Unterwasseraufbauten am Trägerfahrzeug in nicht vorhersehbarer Weise verzerrt, was zu systematischen, räumlich veränderlichen Peilfehlern führt. Bei der Funktionsprüfung von auch zur Peilung eingesetzten Sonaranlagen im Rahmen von Seeversuchen werden diese Peilfehler ermittelt und nachträglich durch aufwendige Fehlerberechnungen kompensiert. Die korrigierten, von Zielen gewonnenen Peilwerte werden dann an eine nachfolgende Lagedarstellung weitergegeben. Ohne diese Fehlerkompensation wird dem Bediener an Bord außerdem ein Detektionspanorama sichtbar gemacht, das aus den Rohdaten für die Peilung generiert ist und durch die vorstehend genannten Unvollkommenheiten verzerrt ist. Will der Bediener in dem Detektionspanorama ein vermutetes Ziel von Hand einmessen, kann er systematische Peilfehler nicht berücksichtigen, was zu Diskrepanzen bei der Beurteilung der Lage führt.

Der Erfindung liegt die Aufgabe zugrunde, ein Peilverfahren der eingangs genannten Art dahin zu verbessern, dass systembedingte Fehler bereits in den zur Bildung von Gruppensignalen der Richtcharakteristiken bzw. "preformed beams" verwendeten, verzögerten Empfangssignalen kompensiert werden und sich somit aus den Gruppensignalen ein Detektionspanorama und eine Lagedarstellung ohne systematische Peilfehler ergibt.

Die Aufgabe ist erfindüngsgemäß durch die Merkmale im Anspruch 1 gelöst.

Das erfindungsgemäße Verfahren hat den Vorteil, dass mit den empirisch bestimmten Zeitverzögerungskoeffizienten eine einbaubedingte, fahrzeugfeste Verzerrung der durch die Gruppensignale gebildeten "preformed beams" oder Richtcharakteristiken berücksichtigt ist und damit letztere gegenüber "preformed beams", die für ungestörten Schallwellenempfang errechnet werden, quasi vorverzerrt sind. Die empirische Bestimmung erfolgt vorzugsweise bei den Seeversuchen zur Funktionsprüfung der Peilanlage durch Peilen eines Kunstziels, das mit bekannten Positionen um das Trägerfahrzeug der Peilanlage herumfährt. Für jede geschwenkte Hauptrichtung der Richtcharakteristik werden vom ortsfesten Trägerfahrzeug die Zeitverzögerungskoeffizienten iterativ optimiert. Im Einsatz sind dadurch die nach Detektion von Zielen ermittelten Zielpeilungen von systematischen Peilfehlern befreit. Das Detektionspanorama wird unverzerrt dargestellt und eine von Hand vorgenommene Zielverfolgung arbeitet grundsätzlich mit zutreffenden, "wahren" Peilwerten, so dass Peildaten auf den Anzeigen, z.B. im Detektionspanorama und in der Lagedarstellung, übereinstimmen und überall mit gleicher Genauigkeit ermittelt werden. Im Falle einer automatischen Zielverfolgung wird diese von einbaubedingten Winkelbeschleunigungen befreit, damit wird nach Zielverlust das automatische Wiedereinsetzen von Zielerfassungen verbessert und der Bediener entlastet. Die mit dem erfindungsgemäßen Verfahren gewonnenen Zieldaten korrespondieren mit über andere Ortungssysteme gewonnenen Zieldaten, so dass sie ohne Korrekturmaßnahmen miteinander verglichen werden können.

Zweckmäßige Ausführungsformen des erfindungsgemäßen Verfahrens mit vorteilhaften Weiterbildungen und Ausgestaltungen der Erfindungen ergeben sich aus den weiteren Ansprüchen.

Die Erfindung ist anhand eines in der Zeichnung illustrierten Ausführungsbeispiels im folgenden näher beschrieben. Es zeigen:

Fig. 1          eine perspektivische Ansicht eines einen Antennenträger darstellenden U-Boots mit einer Seitenantenne,

Fig. 2          eine schematisierte Darstellung des Schalleinfalls an der Seitenantenne zur Illustrierung von Zeitverzögerungskoeffizienten,

Fig. 3          ein Blockschaltbild einer Schaltungsanordnung zur Illustrierung des Verfahrens,

Fig. 4 und 5    jeweils die Peilung von zwei Zielen Z und Z* mit Zuordnung der Peilwinkel bei unterschiedlichem Heading des Antennenträgers.

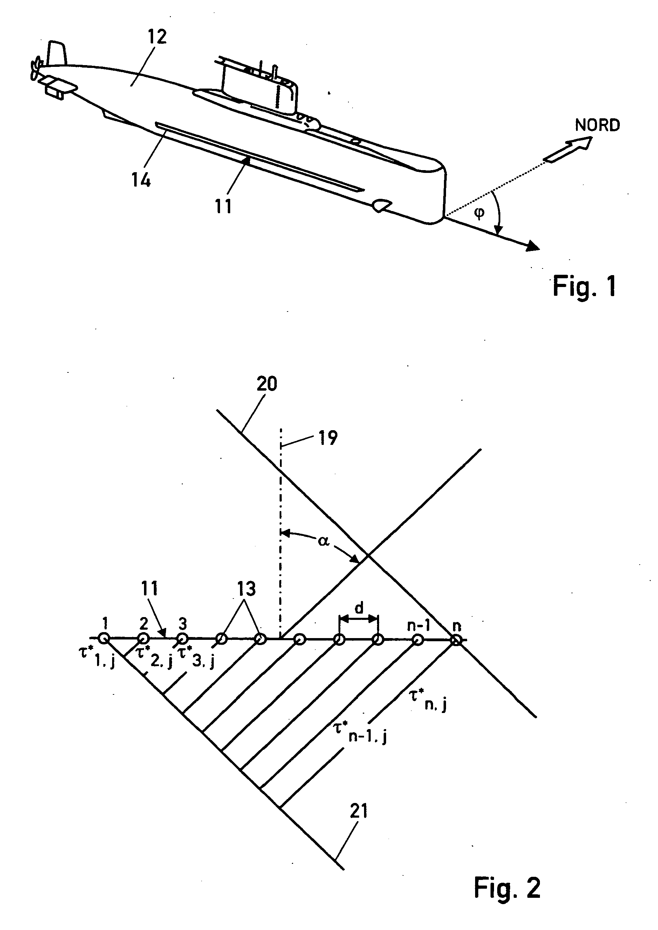

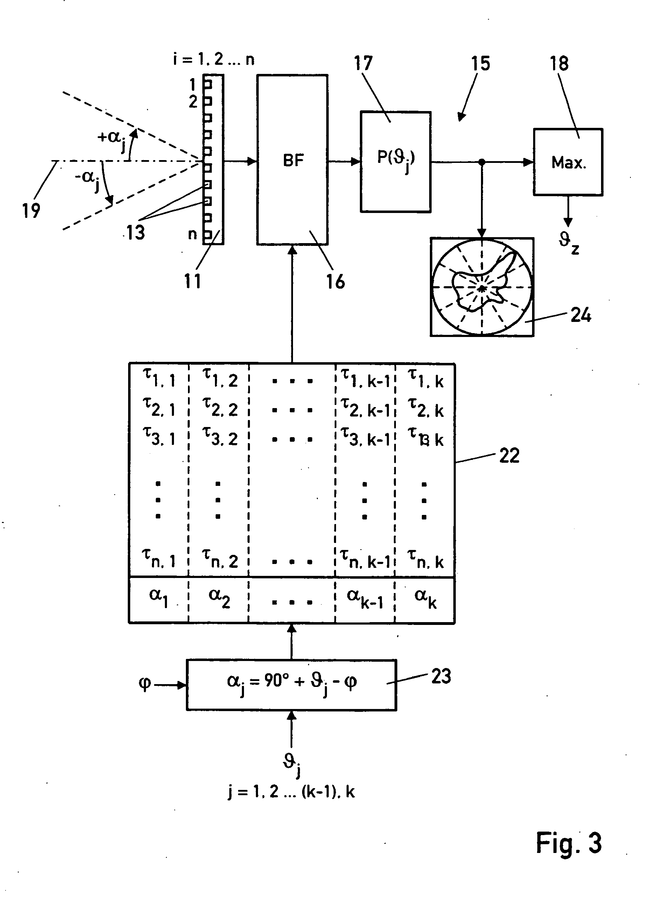

Bei dem nachfolgend beschriebenen Verfahren zur Peilung von schallabstrahlenden, d.h. schallerzeugenden oder schallreflektierenden, Zielen wird eine Unterwasser-Empfangsantenne 11 verwendet, die an einem Antennenträger 12 festgelegt ist. In dem in Fig. 1 dargestellten Ausführungsbeispiel ist der Antennenträger 12 ein U-Boot, das steuerbord- und backbordseitig je eine Empfangsantenne 11 trägt, die als Flankarray oder Seitenantenne bezeichnet wird. In Fig. 1 ist von den beiden Empfangsantennen 11 lediglich die steuerbordseitige Empfangsantenne 11 zu sehen. Wie schematisiert in Fig. 2 und 3 angedeutet ist, weist die Empfangsantenne 11 eine Vielzahl n von elektroakustischen Wandlern 13 auf, die äquidistant, im Abstand d (Fig. 2) voneinander hintereinander gereiht sind. Wie hier nicht weiter dargestellt ist, ist die aus den elektroakustischen Wandlern 13 sich zusammensetzende Wandleranordnung komplett von einem schalltransparenten Hüllkörper 14 überdeckt, der mittels einer hier nicht dargestellten Trägerstruktur an der Bordwand des U-Boots befestigt ist. Die Empfangsantenne 11 spannt einen Empfangssektor auf, innerhalb dessen einfallender Schall, der von Ziele bildenden Schallquellen abgestrahlt wird und sich im Wasser ausbreitet, von den Wandlern 11 empfangen wird. Die Wandler 11 sind in herkömmlicher Weise mit einer Peilanlage 15 verbunden, in welcher anhand der elektrischen Ausgangssignale der Wandler 13, im folgenden Empfangssignale genannt, die Einfallsrichtung des Schalls und damit die Peilrichtung zu den Zielen bestimmt wird.

Die Peilanlage 15 umfasst in bekannter Weise einen Richtungsbildner 16, auch Beamformer genannt, einen Signalverarbeitungsblock 17 und einen Maximumdetektor 18. Im Richtungsbildner 16 werden in bekannter Weise die Empfangssignale der Wandler 11 durch Anwendung von Zeitverzögerungskoeffizienten derart zeitverzögert, dass sie in einer zur Einfallsrichtung des Schalls rechtwinkligen Zeitbezugsebene 21 konphas sind. In Fig. 2 ist als Beispiel eine unter dem Winkel $\alpha$ einfallende, ebene Schallwellenfront 20 dargestellt. Der Einfallswinkel $\alpha$ ist dabei gegen die Normale 19 der Empfangsantenne 11 gemessen, die bei der im Beispiel der Fig. 1 dargestellten Seitenantenne rechtwinklig zur Längsachse des Antennenträgers 12 ausgerichtet ist.

Ändert sich die Ausrichtung des Antennenträgers 12 im Seegebiet, so ändert sich bei unveränderter Schallausbreitungsrichtung der Schallwellenfront 20 auch der Einfallswinkel $\alpha$ der Schallwellenfront 20 an der Empfangsantenne 11.

Wie in Fig. 2 schematisiert illustriert ist, müssen die Empfangssignale der einzelnen Wandler 13 unterschiedlich zeitverzögert werden, damit sie in der Zeitbezugsebene 21 zueinander konphas sind. Die erforderlichen Zeitverzögerungskoeffizienten $\tau^*_{i,j}$ für die i Wandler 13 mit i=1,2...n ergeben sich aus den Schalllaufzeiten vom Überstreichen des ersten Wandlers 13 (i=n) durch die Schallwellenfront 20 bis zum Überstreichen des letzten Wandlers 13 (i=1) durch die Schallwellenfront 20. Üblicherweise werden die erforderlichen Zeitkoeffizienten $\tau^*_{i,j}$ für jeden i-ten Wandler 13 und jede j-te Einfallsrichtung der Schallwelle mit den Einfallswinkeln $\alpha_j$ berechnet gemäß

$$\tau^*_{i,j} = (n-1)d \cdot \sin \alpha_j \qquad (1)$$

mit

i = 1, 2 ... n und
j = 1, 2... k

und abgespeichert. Diese Berechnung der Zeitverzögerungskoeffizienten $\tau^*_{i,j}$ geht von der Annahme aus, dass die elektroakustischen Wandler 13 der Empfangsantenne 11 im freien Raum und ohne die unvermeidlichen Streuungen der Wandlerempfindlichkeiten und/oder der Einbauort der Wandler in idealer Weise aufgebaut sind. Solche idealen Bedingungen liegen jedoch bei auf einem Antennenträger 12 festgelegter Empfangsantenne 11 nicht vor. Zusätzlich erfahren die an der Empfangsantenne 11 einfallenden Schallwellenfronten 20 durch die Form des den Antennenträger 12 darstellenden U-Boots, den die Wandler 13 abdeckenden Hüllkörper 14 und den unvermeidlichen Hüllkörperhalterungen nicht unbeträchtliche Verzerrungen, so dass auch die ideale Annahme der ebenen Wellenfront 20 nicht mehr zutrifft. Dies führt am Ende der Signalverarbeitung zu unvermeidlichen Peilfehlern, die nachträglich korrigiert werden müssen.

Um solche Peilfehler zu eliminieren, werden bei dem hier vorgestellten Verfahren die Zeitverzögerungskoeffizienten $\tau_{i,j}$ empirisch durch trägerbezogenes Peilen von Zielen im Seegebiet bestimmt, wobei die Ziele in bekannten, um äquidistante Winkelschritte, z.B. 1°, geschwenkten Peilrichtungen gegenüber dem ortsfesten Antennenträger 12 liegen. Die hier bei erhaltenen, trägerbezogenen Peilwinkel $\alpha_j$ sind die in Fig. 2 angegebenen Einfallswinkel $\alpha$ der Schallwellenfronten 20 und gegen die Normale 19 der Empfangsantenne 11 gemessen. Für jeden trägerbezogenen Peilwinkel $\alpha_j$, also jeden gegen die Normale 19 gemessenen Einfallwinkel einer Schallwellenfront 20, wird ein Satz von den Wandlern 13 jeweils zugeordneten Zeitverzögerungskoeffizienten $\tau_{i,j}$ bestimmt und in einem Speicher 22 (Fig. 3) abgelegt.

Bei der Bestimmung der Zeitverzögerungskoeffizienten $\tau_{i,j}$ wird vorteilhaft in der Weise verfahren, dass in der Peilanlage 15 die für ungestörten Schalleinfall gemäß Gl. (1) für ideale Einbaubedingungen theoretischen Zeitkoeffizienten $\tau^*_{i,j}$ auf die Empfangssignale der Wandler 13 angewendet und die entsprechend zeitverzögerten Empfangssignale im Signalverarbeitungsblock 17 zu Gruppensignalen addiert werden. Die Pegel der Gruppensignale werden über die Peilwinkel $\alpha_j$ aufgetragen. Die theoretischen Zeitverzögerungskoeffizienten $\tau^*_{i,j}$ werden solange verändert, bis unter den bekannten Peilrichtungen Maxima im Pegelverlauf auftreten. Der dabei für jedes erhaltene Maximum eingestellte Satz von "kalibrierten" Zeitverzögerungskoeffizienten $\tau_{i,j}$ wird unter dem dem Pegelmaximum zugehörigen, trägerbezogenen Peilwinkel $\alpha_{i,j}$ im Speicher 22 abgelegt. Die bekannten Peilrichtungen werden z.B. dadurch erhalten, dass ein eine Schallquelle darstellendes Schiff im konstanten, radialen Abstand den Antennenträger 12 umfährt und aus den jeweiligen Schiffspositionen und der unveränderten Position des Antennenträgers 12 die Peilrichtungen berechnet werden.

Zur Detektion und Peilung von Zielen wird über den Empfangsektor ein Fächer von "preformed beams" oder Richtcharakteristiken in Zuordnung zu einer Vielzahl von nordbezogenen Peilwinkel $\vartheta_j$ aufgespannt, die gegeneinander um eine konstante Peilwinkeldifferenz, z.B. 1°, verschwenkt sind. Die Vielzahl der nordbezogenen Peilwinkel $\vartheta_j$ werden in einer Recheneinheit 23 (Fig. 3) in einer gleichen Vielzahl von trägerbezogenen Peilwinkeln $\alpha_j$ umgerechnet gemäß

$$\alpha_j = 90° + \vartheta_j - \varphi \qquad (2),$$

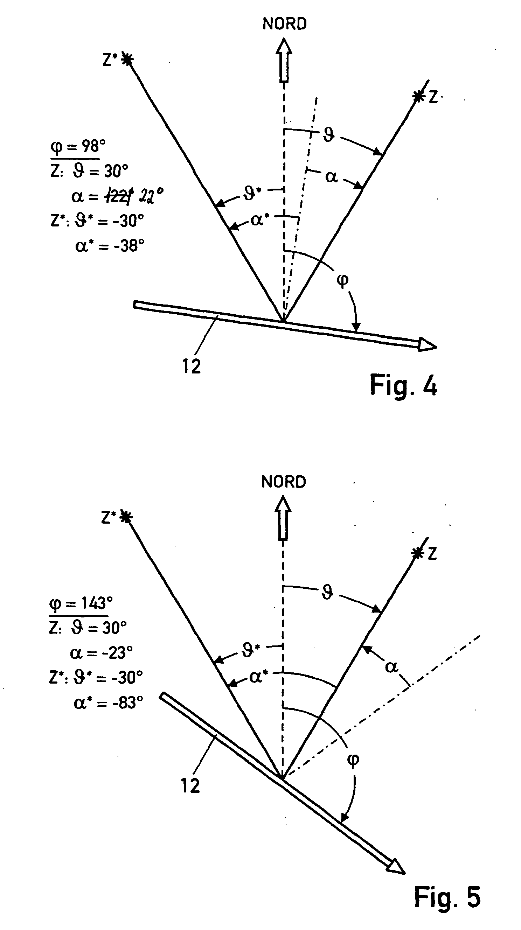

wobei $\varphi$ der Winkel der Längsachse des Antennenträgers 12 (in Fig. 1 des U-Boots) gegen die geographische Nordrichtung, das sog. Heading, ist. Der Zusammenhang von Heading $\varphi$, nordbezogenem Peilwinkel $\vartheta$ und trägerbezogenem Peilwinkel $\alpha$ ist aus Fig. 4 und 5 ersichtlich. Der fahrzeugbezogene Peilwinkel $\alpha$ entspricht dabei dem eingangs erwähnten, gegen die Normale 19 der Empfangsantenne 11 gemessenen Einfallswinkel der ebenen Schallwellenfront 20 in Fig. 2. Ausgehend von der Normalen 19 wird dabei ein positiver trägerbezogener Peilwinkel $\alpha$ im Uhrzeigersinn und ein negativer trägerbezogener Peilwinkel $\alpha$ entgegen Uhrzeigersinn abgetragen. In gleicher Weise wird ausgehend von der geographischen Nordrichtung ein positiver nordbezogener Peilwinkel 9 im Uhrzeigersinn und ein negativer nordbezogener Peilwinkel $\vartheta$ entgegen Uhrzeigersinn gemessen. Auch das Heading $\varphi$ wird im Uhrzeigersinn ausgehend von der Nordrichtung gemessen.

Mit dem zu dem jeweiligen nordbezogenen Peilwinkel $\vartheta_j$ berechneten, trägerbezogenen Peilwinkel $\alpha_j$ wird der diesem trägerbezogenen Peilwinkel $\alpha_j$ zugehörige Satz von "kalibrierten" Zeitverzögerungskoeffizienten $\tau_{i,j}$ aus dem Speicher 22 (Fig. 3) ausgelesen und dem Richtungsbildner 16 zugeführt. Im Richtungsbildner 16 werden auf die Empfangssignale der Wandler 13 die jeweiligen Sätze von "kalibrierten" Zeitverzögerungskoeffizienten $\tau_{i,j}$ angewendet und die entsprechend zeitverzögerten Empfangssignale im Signalverarbeitungsblock 17 zu Gruppensignalen addiert. Die Pegel der Gruppensignale werden in Zuordnung zu den nordbezogenen Peilwinkeln $\vartheta_j$ abgelegt. Aus der Vielzahl der abgelegten Pegel ergibt sich ein Pegelverlauf $P(\vartheta_j)$ über die nordbezogenen Peilwinkel $\vartheta_j$, der auf einem Display 24 dargestellt wird. Mittels des Maximumdetektors 18 werden im Pegelverlauf $P(\vartheta_j)$ Pegelmaxima bestimmt und die den Pegelmaxima zugehörigen Peilwinkel $\vartheta_z$ als Zielpeilung zur Anzeige gebracht.

In Fig. 4 und 5 sind zwei Beispiele für Zielpeilungen von zwei Zielen Z und Z* bei verschiedener Ausrichtung des Antennenträgers 12 dargestellt. In jedem Ausführungsbeispiel wird ein Ziel Z unter einem nordbezogenen Peilwinkel $\vartheta=30°$ und ein Ziel Z* unter einem nordbezogenen Peilwinkel $\vartheta=-30°$ detektiert. Das Heading $\varphi$ des Antennenträgers 12 beträgt in Fig. 4 $\varphi=98°$ und in Fig. 5 $\varphi=143°$.

Bei der Peilung des Ziels Z in Fig. 4 wurde der Satz der "kalibrierten" Zeitverzögerungskoeffizienten $\vartheta_{i,j}$ auf die Empfangssignale der Wandler 13 angewendet, der für einen trägerbezogenen Peilwinkel $\alpha=+22°$ abgespeichert ist. Diese Zeitverzögerungskoeffizienten $\tau_{i,j}$ kompensieren bereits einen trägerfesten Peilfehler unter dem trägerbezogenen Peilwinkel $\alpha=+22°$, so dass der nordbezogene Peilwinkel $\vartheta=30°$ keinen Peilfehler enthält und der wahren Peilung entspricht. Bei der Peilung des Ziels Z* unter dem nordbezogenen Peilwinkel $\vartheta^*=-30°$ wurde auf die Empfangssignale der Wandler 13 der Satz von "kalibrierten" Zeitverzögerungskoeffizienten $\tau_{i,j}$ angewendet, der unter dem trägerbezogenen Peilwinkel $\alpha^*=-38°$ im Speicher 22 abgelegt ist. Dieser Satz von Zeitverzögerungskoeffizienten $\tau_{i,j}$ kompensiert wiederum einen Peilfehler, der sich einbaubedingt bei einem trägerbezogenen Peilwinkel von $\alpha=-38°$ ergibt, so dass die nordbezogene Peilung des Ziels Z* keinen Peilfehler aufweist.

In dem Ausführungsbeispiel der Fig. 5 hat sich das Heading $\varphi$ des Antennenträgers 12 geändert. Demzufolge wurden bei der Peilung der räumlich unveränderten Ziele Z und Z* nunmehr die "kalibrierten" Zeitverzögerungskoeffizienten $\tau_{i,j}$ auf die Empfangssignale der Wandler 13 angewendet, die im Speicher 22 unter dem trägerbezogenen Peilwinkel $\alpha=-23°$ bzw. $\alpha=-83°$ abgespeichert sind. Die unter diesem trägerbezogenen Peilwinkeln auftretenden, einbaubedingten Peilfehler sind in den "kalibrierten" Zeitverzögerungskoeffizienten $\tau_{i,j}$ berücksichtigt, so dass die nordbezogenen Peilwinkel $\vartheta$ und $\vartheta^*$ für die Ziele Z und Z* wiederum peilfehlerfrei sind.

**Patentansprüche**

1. Verfahren zur Peilung von schallabstrahlenden Zielen unter Verwendung einer auf einem Antennenträger (12) festgelegten Empfangsantenne (11) mit einer Vielzahl von elektroakustischen Wandlern (13) zum Empfang von Schallwellen und Generieren von elektrischen Empfangssignalen, bei dem

   - zur Bildung konphaser Empfangssignale Zeitverzögerungskoeffizienten auf die Empfangssignale angewendet und die konphasen Empfangssignale zu Gruppensignalen addiert werden, die durch Peilwinkel definierte Peilrichtungen angeben,
   - die Pegel der Gruppensignale in Zuordnung zu den Peilwinkeln erfasst werden und
   - in dem sich damit ergebenden Pegelverlauf über die Peilwinkel ($\vartheta_z$), die Pegelmaxima zugehörig sind, als Zielpeilungen ausgegeben werden,

   **dadurch gekennzeichnet, dass** durch trägerbezogenes Peilen von Zielen im Seegebiet, die unter vorgebbaren um Winkelschritte geschwenkten Peilrichtungen liegen, für jeden trägerbezogenen Peilwinkel ($\alpha_j$) ein Satz von den Wandlern (13) zugeordneten Zeitverzögerungskoeffizienten ($\tau_{i,j}$) empirisch bestimmt und abgespeichert wird und dass für nordbezogene Peilwinkel ($\vartheta_j$) mit dem Heading ($\varphi$) des Antennenträgers (12) trägerbezogene Peilwinkel ($\alpha_j$) berechnet und die den berechneten, trägerbezogenen Peilwinkeln ($\alpha_j$) zugehörigen, abgespeicherten Sätze von Zeitverzögerungskoeffizienten ($\tau_{i,j}$) auf die Empfangssignale angewendet werden.

2. Verfahren nach Anspruch 1, **dadurch gekennzeichnet, dass** die trägerbezogenen Peilwinkel ($\alpha_j$) gegen die Nor-male (19) der Empfangsantenne (11) gemessen werden und dass die Berechnung der trägerbezogenen Peilwinkel ($\alpha_j$) aus den nordbezogenen Peilwinkeln ($\vartheta_j$) und dem Heading ($\varphi$) gemäß

$$\alpha_j = 90° - \varphi + \vartheta_j$$

   durchgeführt wird, wobei das Heading ($\varphi$) der im Uhrzeigersinn von der Nordrichtung aus abgetragene Lagewinkel der Längsachse des Antennenträgers (12) ist und positive trägerbezogene Peilwinkel ($\alpha_j$) und positive nordbezogene Peilwinkel ($\vartheta_j$) von der Normalen (19) bzw. der Nordrichtung aus im Uhrzeigersinn und negative trägerbezogene Peilwinkel ($\alpha_j$) und negative nordbezogene Peilwinkel ($\vartheta_j$) von der Normalen (19) bzw. der Nordrichtung aus entgegen Uhrzeigersinn gemessen werden.

3. Verfahren nach Anspruch 1 oder 2, **dadurch gekennzeichnet, dass** zur empirischen Bestimmung der Zeitverzö-gerungskoeffizienten ($\tau_{i,j}$) für die trägerbezogenen Peilwinkel ($\alpha_j$) bei ungestörtem Schallempfang berechnete und abgespeicherte Zeitverzögerungskoeffizienten ($\tau^*_{i,j}$) solange verändert werden, bis aus den Gruppensignalen abgeleitete Zielpeilungen mit den bekannten Peilrichtungen übereinstimmen.

**Claims**

1. Method for finding the direction of sound-emitting targets using a receiving antenna (11) which is fixed on an antenna carrier (12) and has a large number of electroacoustic transducers (13) for reception of sound waves and for generation of electrical received signals, in which

   - time-delay coefficients are applied to the received signals in order to form in-phase received signals, and the in-phase received signals are added to form array signals, which indicate bearing directions defined by bearing angles,
   - the levels of the array signals are recorded, associated with the bearing angles, and
   - bearing angles ($\vartheta_z$) which are associated with level maxima in the level profile which is obtained in this way over the bearing angles are emitted as target bearings,

   **characterized in that** a set of time-delay coefficients ($\tau_{i,j}$) which are associated with the transducers (13) is determined empirically and is stored for each carrier-related bearing angle ($\alpha_j$) by carrier-related direction finding of targets in the sea region which are located in predetermined bearing directions which are scanned by angle steps, and **in that** carrier-related bearing angles ($\alpha_j$) are calculated for north-related bearing angles ($\vartheta_j$) using the heading ($\varphi$) of the antenna carrier (12), and the stored sets of time-delay coefficients ($\tau_{i,j}$) which are associated with the calculated, carrier-related bearing angles ($\alpha_j$) are applied to the received signals.

2. Method according to Claim 1, **characterized in that** the carrier-related bearing angles ($\alpha_j$) are measured with respect to the normal (19) to the receiving antenna (11), and **in that** the carrier-related bearing angles ($\alpha_j$) are calculated from the north-related bearing angles ($\vartheta_j$) and the heading ($\varphi$) using:

$$\alpha_j = 90° - \varphi + \vartheta_j$$

with the heading ($\varphi$) being the position angle of the longitudinal axis of the antenna carrier (12) subtracted from the north direction in the clockwise direction, and with positive carrier-related bearing angles ($\alpha_j$) and positive north-related bearing angles ($\vartheta_j$) being measured from the normal (19) or from the north direction, respectively, in the clockwise direction, and negative carrier-related bearing angles ($\alpha_j$) and negative north-related bearing angles ($\vartheta_j$) being measured from the normal (19) or the north direction, respectively, in the anticlockwise direction.

3. Method according to Claim 1 or 2, **characterized in that**, in order to empirically determine the time-delay coefficients ($\tau_{i,j}$) for the carrier-related bearing angles ($\alpha_j$) for sound reception without interference, calculated and stored time-delay coefficients ($\tau^*_{i,j}$) are varied until target bearings which have been derived from the array signals match the known bearing directions.


### Revendications

1. Procédé de relèvement de cibles émettant du bruit en utilisant une antenne réceptrice (11) fixée sur un support d'antenne (12) et comprenant une pluralité de convertisseurs électroacoustiques (13) pour recevoir des ondes sonores et générer des signaux de réception électriques, avec lequel

    - des coefficients de retard sont appliqués aux signaux reçus pour former des signaux reçus cophasés et les signaux reçus cophasés sont additionnés pour obtenir des signaux groupés qui indiquent des directions de relèvement définies par un angle de relèvement,
    - les niveaux des signaux groupés en correspondance avec les angles de relèvement sont détectés et
    - les angles de relèvement ($\vartheta_z$) qui correspondent aux relèvements maximum sont donnés comme relèvements de la cible dans la courbe de relèvement ainsi obtenue **caractérisé en ce qu'**un ensemble de coefficients de retard ($\tau_{i,j}$) associés aux convertisseurs (13) est déterminé de manière empirique puis mémorisé pour chaque angle de relèvement en référence au porteur ($\alpha_j$) par un relèvement de cibles par rapport au porteur dans le domaine maritime, lesquelles se trouvent dans des directions de relèvement pouvant être prédéfinies et pivotées à des pas angulaires, et que les angles de relèvement en référence au porteur ($\alpha_j$) sont calculés pour les angles de relèvement en référence au nord ($\vartheta_j$) avec le cap ($\varphi$) du support d'antenne (12) et les ensembles de coefficients de retard ($\tau_{i,j}$), calculés et mémorisés correspondant aux angles de relèvement en référence au porteur ($\alpha_j$) sont appliqués aux signaux reçus.

2. Procédé selon la revendication 1, **caractérisé en ce que** les angles de relèvement en référence au porteur ($\alpha_j$) sont mesurés par rapport à la normale (19) de l'antenne de réception (11) et que le calcul des angles de relèvement en référence au porteur ($\alpha_j$) est effectué à partir des angles de relèvement en référence au nord ($\vartheta_j$) et du cap ($\varphi$) conformément à la formule

$$\alpha_j = 90° - \varphi + \vartheta_j,$$

le cap ($\varphi$) étant l'angle de position de l'axe longitudinal du support d'antenne (12) reporté depuis la direction du nord dans le sens des aiguilles d'une montre et les angles de relèvement en référence au porteur ($\alpha_j$) positifs ainsi que les angles de relèvement en référence au nord ($\vartheta_j$) positifs depuis la normale (19) ou la direction du nord étant mesurés dans le sens des aiguilles d'une montre et les angles de relèvement en référence au porteur ($\alpha_j$) négatifs ainsi que les angles de relèvement en référence au nord ($\vartheta_j$) négatifs étant mesurés dans le sens inverse des aiguilles d'une montre depuis la normale (19) ou la direction du nord.

**3.** Procédé selon la revendication 1 ou 2, **caractérisé en ce que** pour effectuer le calcul empirique des coefficients de retard ($\tau_{i,\,j}$) pour les angles de relèvement en référence au porteur ($\alpha_j$), les coefficients de retard ($\tau^{\star}_{i,\,j}$) calculés et mémorisés lors d'une réception non perturbée du son sont modifiés jusqu'à ce les relèvements de la cible dérivés des signaux groupés coïncident avec les directions de relèvement connues.

**Fig. 1**

**Fig. 2**

**Fig. 3**

$$\varphi = 98°$$
$$\overline{Z: \vartheta = 30°}$$
$$\alpha = \cancel{122} \ 22°$$
$$Z^*: \vartheta^* = -30°$$
$$\alpha^* = -38°$$

**Fig. 4**

12

$$\varphi = 143°$$
$$\overline{Z: \vartheta = 30°}$$
$$\alpha = -23°$$
$$Z^*: \vartheta^* = -30°$$
$$\alpha^* = -83°$$

**Fig. 5**

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027538